# EUROPEAN PATENT APPLICATION

(11) **EP 2 866 061 A2**
(43) Date of publication of application: **29.04.2015**
(21) Application number: 14190639.6
(22) Date of filing: 28.10.2014
(51) Int. Cl.: G01V 99/00

(54) **Reservoir model tuning with complex parameter interactions**

(30) Priority: 28.10.2013 US 201361896400 P; 19.08.2014 US 201414462767
(71) Applicant: Services Petroliers Schlumberger, 75007 Paris (FR); Logined B.V., 2586 BJ S Gravenhage (NL)
(72) Inventor: Fang, Peng, Houston, TX 77057 (US); Zhou, Wentao, Houston, TX 77057 (US); Li, Ji, Houston, TX 77057 (US); Wu, Jin Yong, Houston, TX 77057 (US)
(74) Representative: Li, Boxi

(57) **Abstract**

Methods, systems, and non-transitory, computer-readable media for tuning a model of a subterranean domain. The method may include determining a relationship between a first parameter of the model and a second parameter of the model. A modification to the first parameter causes the second parameter to be modified according to the relationship. The method may also include receiving data representing a physical characteristic of a reservoir represented in the model of the subterranean domain, and modifying the first parameter based at least partially on the data. The method may also include modifying the second parameter based on the relationship, by operation of a processor. The method may further include updating the model using the first parameter and the second parameter after modifying the first parameter and after modifying the second parameter.

## Description

### CROSS-REFERENCE TO RELATED APPLICATION

This application claims priority to U.S. Provisional Patent Application having Serial No. 61/896,400, which was filed on October 28, 2013 and U.S. Non Provisional Patent Application having Serial No. 14/462,767, which was filed on August 19, 2014. Both of which are incorporated by reference herein in their entirety.

### BACKGROUND

Computational models, such as those used in modeling geological formations and/or reservoirs, may be refined or "tuned" according to data received related to formation or reservoir characteristics, such as permeability, viscosity, pressure, etc. Production management processes collect such data, whether historical or in real-time, and include performing analyses on the data. In such processes, this data, combined with pressure transient analysis (PTA) and/or rate transient analysis (RTA), may be employed to promote accurate interpretation of reservoir parameters when the flow regime is accurately identified.

PTA and RTA may employ high-frequency or long-term production data. Further, PTA relates to the analysis of pressure changes over time in the reservoir during pressure transient testing. RTA may combine Darcy's law with the equation of state and material balance for production analysis and can be used to create a model that history matches the data, which can be used to forecast production scenarios. Flow regime is the predominant flow geometry reflected in the pressure-transient response, generally recognizable in a log-log plot of a pressure-change derivative. Flow regimes include radial flow, spherical flow, bilinear flow, linear flow, etc. and can generally be visually identified in the plot.

Different flow regimes can require the interpretation of different reservoir parameters. Further, there may be relationships between the parameters, such that altering a first parameter, e.g., as part of tuning, may cause a one or more other, second parameters to change. Generally, however, only one parameter is applied back to the reservoir or well model at a time during the tuning process, and thus the interaction between the parameters may not be visible.

### SUMMARY

Embodiments of the present disclosure may provide methods, systems, and non-transitory, computer-readable media for tuning a model of a subterranean domain. For example, the method may include determining a relationship between a first parameter of the model and a second parameter of the model. A modification to the first parameter causes the second parameter to be modified according to the relationship. The method may also include receiving data representing a physical characteristic of a reservoir represented in the model of the subterranean domain, and modifying the first parameter based at least partially on the data. The method may also include modifying the second parameter based on the relationship, by operation of a processor. The method may further include updating the model using the first parameter and the second parameter after modifying the first parameter and after modifying the second parameter.

It will be appreciated that this summary is intended merely to introduce some aspects of the present methods, systems, and media, which are more fully described and/or claimed below. Accordingly, this summary is not intended to be limiting.

### BRIEF DESCRIPTION OF THE DRAWINGS

The accompanying drawings, which are incorporated in and constitute a part of this specification, illustrate embodiments of the present teachings and together with the description, serve to explain the principles of the present teachings. In the figures:
Figure 1 illustrates a flowchart of a method for tuning a model of a reservoir, according to an embodiment.
Figure 2 illustrates a view of a model of a reservoir, according to an embodiment.
Figure 3 illustrates a table of parameters of the model, according to an embodiment.
Figure 4 illustrates a log-log pressure change plot, according to an embodiment.
Figure 5 illustrates the table of parameters after modifying at least one parameter, according to an embodiment.
Figure 6 illustrates a schematic view of nodes representing complex parameters, according to an embodiment.
Figure 7 illustrates a schematic view of a computing system, according to an embodiment.

### DETAILED DESCRIPTION

The following detailed description refers to the accompanying drawings. Wherever convenient, the same reference numbers are used in the drawings and the following description to refer to the same or similar parts. While several embodiments and features of the present disclosure are described herein, modifications, adaptations, and other implementations are possible, without departing from the spirit and scope of the present disclosure.

In general, embodiments of the disclosure may provide methods, systems, and computer-readable media for tuning a reservoir model. For example, the method may include receiving data indicating a relationship between two or more parameters in a reservoir model. The data may be, for example, PTA or RTA data, e.g., established during testing of reservoir and/or wellbore conditions. Further, the method may include manipulating the reservoir parameters, for example, to tune the reservoir parameters to the data received. Changing one parameter may result in one or more other parameters being changed. The present method may then apply the changes in both parameters to the reservoir model, for example. Further, the present method may include setting indicators related to the number of times a given parameter has changed, so as to break dead-lock loops that may occur when changing a first parameter results in changes to a second variable and vice versa.

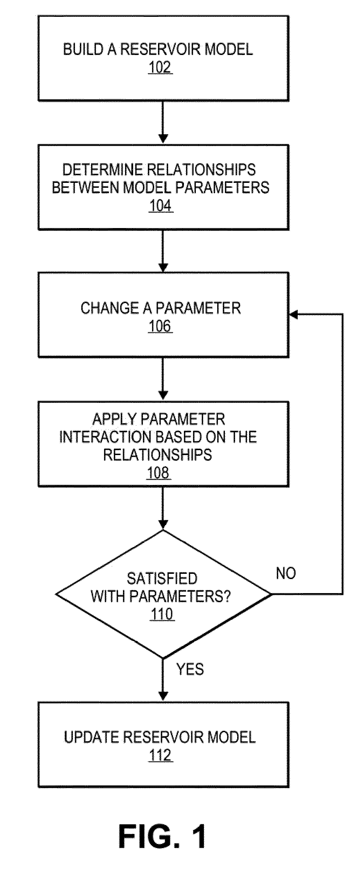

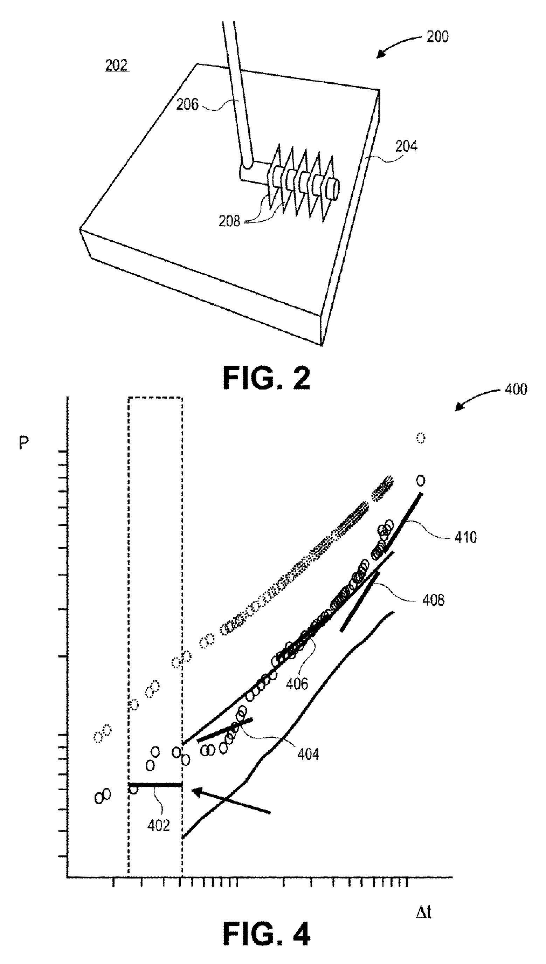

Turning now to the specifically illustrated, example embodiments, Figure 1 illustrates a flowchart of a method 100 for tuning a model, such as a reservoir model, according to an embodiment. The method 100 may begin by building the model, as at 102. With continuing reference to Figure 1, Figure 2 illustrates a specific example of a model 200 built at 102, according to one embodiment. It will be appreciated that the illustrated model 200 is but one example among many possible and contemplated in the present disclosure.

As shown, the model 200 may include a domain 202, which may be a representation of a subterranean volume of any size. The domain 202 may include a representation of a reservoir 204 (or a portion thereof), or any other area of interest. The domain 202 may further include a representation of a wellbore 206 extending to the reservoir 204 and a plurality of fractures 208, through which fluid (e.g., including hydrocarbons) from the reservoir 204 may be received into the wellbore 206. It will be appreciated that various models may include representations of a variety of other features relevant to the reservoir and/or formation being modeled.

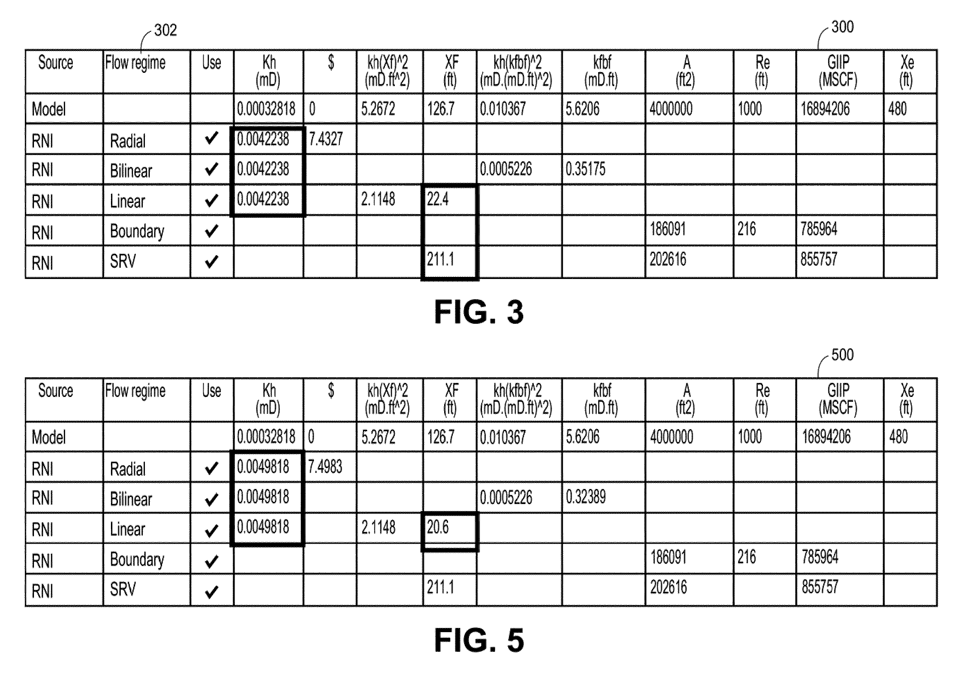

The model 200 may contain a plurality of parameters for the various features, locations, times, etc., of the domain 202. Figure 3 illustrates a specific example of a table 300 of parameters of the reservoir model 200. As shown, the table 300 may include a plurality of parameters, a subset of which may apply for each of the flow regimes in column 302. The parameters of the model 200 may be determined using well logs, seismic data, pressure testing, rate testing, or any other type of data collection. Further, the parameters of the model 200 may be determined via history matching, or any other model construction process. The model 200 may also be employed to view flow characteristics in different flow regimes. As indicated in Figure 3, the flow regimes may include radial, bilinear, linear, boundary, and stimulated reservoir volume (SRV), as shown.

The method 100 may also include determining one or more relationships between the parameters of the reservoir model 200, as at 104 in Figure 1. Relationships between the parameters may be determined in various ways. The relationships may be determined empirically, e.g., based on reservoir testing data, or may be theoretical or estimations, or a combination thereof. Further, the relationships may be defined by equations, in which some parameters may be functions of other parameters, thereby yielding "complex" or interrelated parameters. Referring again to Figure 3, permeability and fracture half-length may be complex parameters. For example, modifying the permeability parameter may result in a modification to the fracture half-length parameter, and/or vice versa.

Figure 4 illustrates a log-log diagnostic plot 400 of pressure change over time, e.g., as part of a pressure transient well test, according to an embodiment. Data points are shown, plotted as circles. The plot 400 may allow for the development of flow regimes that fit with the illustrated data. For example, a first fit line 402 may be representative of a radial flow regime, which may occur first in time. The second fit line 404 may be representative of a bilinear flow regime. The third fit line 406 may be representative of a linear flow regime. The fourth fit line 408 may be representative of a boundary flow regime. The fifth fit line 410 may be representative of a stimulated reservoir volume (SRV) flow regime. It will be appreciated that the order in which the fit lines 402-410 are illustrates is merely an example.

The method 100 may then proceed to the tuning process, which may include changing one of the parameters of the model 200, as at 106. For example, referring to the plot 400, the position or length of the fit line 402 may be modified, e.g. numerically, by modifying one or more parameters and/or visually by manipulating the position of the fit lines 402-410 to more closely relate the flow regimes to the data points acquired during PTA or RTA. In one example, the permeability Kh may be changed.

As noted above, in this example, modifying the permeability Kh may result in a modification of the fracture half-length Xf. Accordingly, to include such complex (e.g., interrelated) parameter changes, the method 100 may apply the parameter interaction, as at 108. For example, Figure 5 illustrates an updated table 500, which may be consistent with the table 300, but with a different value for the permeability Kh. Since permeability Kh may be related to fracture half-length, e.g., in the linear flow regime, the change in permeability Kh may yield a change in the fracture half-length. Comparing the tables 300 and 500 of Figures 3 and 5, it is seen that the permeability in the linear flow regime changes from 0.0042238 mD to 0.0049818 mD, resulting in the fracture half-length changing from 22.4 ft in the plot 300 to 20.6 ft in the plot 500. Again, it is emphasized that these numbers are arbitrarily picked for purposes of illustration and are not to be considered limiting.

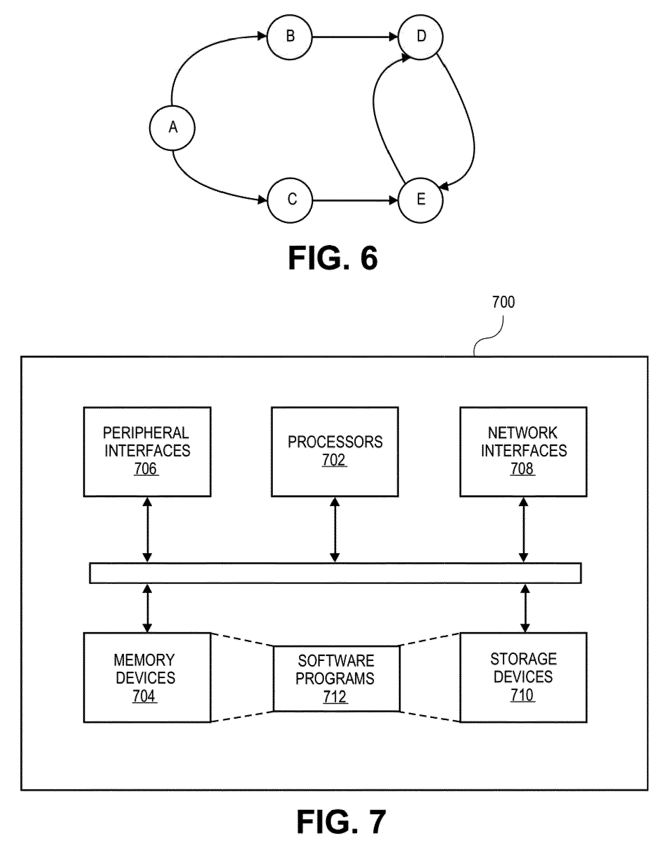

Figure 6 illustrates a further example of complex (e.g., interrelated or linked) parameters, according to an embodiment. Nodes A, B, C, D, and E may represent complex parameters. Lines connecting nodes A-E represent a causal relationship, such that, for example, a modification to node A yields a change in nodes B and C, etc. Further, a change to node D results in a change to node E, and a change to node E results in a change to node D. Thus, a change in either results in a dead-lock loop of E and D being updated infinitely.

To avoid such loops, a flag variable may be associated with one, some, or all of the parameters (e.g., represented by the nodes A-E). The flag variable may track updates to each parameter. In one specific example, the flag may be initialized to false, indicating that a parameter has not been changed. When the parameter is changed the first time, the flag may be changed to true.

Continuing with the simplistic example of Figure 6, when node D is changed, its flag may be changed to true. The node E, however, may not have been changed previously, and thus may be changed, given its causal link with node D. The update to node E may result in a determination that node D should be updated, consistent with the causal relationship shown. However, the flag associated with node D may be set to true, indicating that the value associated with node D has already been changed in this iteration, and thus the method 100 may refrain from further updating the node D.

It will be appreciated that the flag being initialized to false and switched to true upon modification of the parameter associated therewith is merely one example, and could be reversed. Further, such a Boolean flag may be substituted with an indicator of any kind. For example, the indicator may be an integer variable, which may count the number of times the parameters (nodes) are updated. The method 100 may enforce a maximum value for the counter, thus ensuring avoidance of dead-lock loops. The maximum value for the counter may be one, or may be any other number deemed suitable to capture the interaction between complex parameters. Further, the maximum value may be uniform across all parameters, or may be different for one, some, or each of the parameters.

Moreover, the indicator may be reset to its initial value (e.g., false or zero) for each iteration of changing the parameter at 106. In other cases, the indicator may be reset to some other value and/or the maximum value for the indicator may be dynamically updated, for example, such that a history of updates for the parameter may be tracked.

In some cases, all of the parameters may have such an indicator associated therewith. However, in other cases, some of the parameters may not have an indicator associated therewith. For example, the method 100 may include detecting the presence of a loop. In such an embodiment, the method 100 may include tracking the relationships between variables and, for example, implementing one or more graph algorithms to determine the existence of a loop. When such a loop is detected the method 100 may associate indicators with one or more members of the loop, so as to break the loop in the case it is entered.

Referring again to Figure 1, the tuning of the parameters, e.g., as visually indicated in the plot 400 and numerically indicated in the tables 300 and 500, may continue if it is determined that the parameter modification is not acceptable, as at 110. A parameter may be found unacceptable if one or more of the fit lines 402-410 do not appear to be correlated with the apparent flow regime shown in the plot 300. Accordingly, if the modified parameter does not result in the desired model characteristics, the method 100 may return to changing the parameter, at 106 and thereafter applying any parameter interaction, at 108.

When the parameter is determined acceptable at 110, the method 100 may proceed to updating the reservoir model at 112. Accordingly, the parameters describing the characteristics of the reservoir (e.g., how fluid will flow over time, respond to certain operations, etc.) may be updated using the information acquired during the PTA and/or RTA, etc. Moreover, the interactions between the parameters may be captured and efficiently applied, so as to enhance the precision of the model 200, while avoiding deadlock, etc.

Embodiments of the disclosure may also include one or more systems for implementing one or more embodiments of the method 100. Figure 7 illustrates a schematic view of such a computing or processor system 700, according to an embodiment. The processor system 700 may include one or more processors 702 of varying core configurations (including multiple cores) and clock frequencies. The one or more processors 702 may be operable to execute instructions, apply logic, etc. It will be appreciated that these functions may be provided by multiple processors or multiple cores on a single chip operating in parallel and/or communicably linked together.

The processor system 700 may also include a memory system, which may be or include one or more memory devices and/or computer-readable media 704 of varying physical dimensions, accessibility, storage capacities, etc. such as flash drives, hard drives, disks, random access memory, etc., for storing data, such as images, files, and program instructions for execution by the processor 702. In an embodiment, the computer-readable media 704 may store instructions that, when executed by the processor 702, are configured to cause the processor system 700 to perform operations. For example, execution of such instructions may cause the processor system 700 to implement one or more portions and/or embodiments of the method 100 described above.

The processor system 700 may also include one or more network interfaces 706. The network interfaces 706 may include any hardware, applications, and/or other software. Accordingly, the network interfaces 706 may include Ethernet adapters, wireless transceivers, PCI interfaces, and/or serial network components, for communicating over wired or wireless media using protocols, such as Ethernet, wireless Ethernet, etc.

The processor system 700 may further include one or more peripheral interfaces 708, for communication with a display screen, projector, keyboards, mice, touchpads, sensors, other types of input and/or output peripherals, and/or the like. In some implementations, the components of processor system 700 need not be enclosed within a single enclosure or even located in close proximity to one another, but in other implementations, the components and/or others may be provided in a single enclosure.

The memory device 704 may be physically or logically arranged or configured to store data on one or more storage devices 710. The storage device 710 may include one or more file systems or databases in any suitable format. The storage device 710 may also include one or more software programs 712, which may contain interpretable or executable instructions for performing one or more of the disclosed processes. When requested by the processor 702, one or more of the software programs 712, or a portion thereof, may be loaded from the storage devices 710 to the memory devices 704 for execution by the processor 702.

Those skilled in the art will appreciate that the above-described componentry is merely one example of a hardware configuration, as the processor system 700 may include any type of hardware components, including any necessary accompanying firmware or software, for performing the disclosed implementations. The processor system 700 may also be implemented in part or in whole by electronic circuit components or processors, such as application-specific integrated circuits (ASICs) or field-programmable gate arrays (FPGAs).

The foregoing description of the present disclosure, along with its associated embodiments and examples, has been presented for purposes of illustration only. It is not exhaustive and does not limit the present disclosure to the precise form disclosed. Those skilled in the art will appreciate from the foregoing description that modifications and variations are possible in light of the above teachings or may be acquired from practicing the disclosed embodiments.

For example, the same techniques described herein with reference to the processor system 700 may be used to execute programs according to instructions received from another program or from another processor system altogether. Similarly, commands may be received, executed, and their output returned entirely within the processing and/or memory of the processor system 700. Accordingly, neither a visual interface command terminal nor any terminal at all is strictly necessary for performing the described embodiments.

Likewise, the steps described need not be performed in the same sequence discussed or with the same degree of separation. Various steps may be omitted, repeated, combined, or divided, as necessary to achieve the same or similar objectives or enhancements. Accordingly, the present disclosure is not limited to the above-described embodiments, but instead is defined by the appended claims in light of their full scope of equivalents. Further, in the above description and in the below claims, unless specified otherwise, the term "execute" and its variants are to be interpreted as pertaining to any operation of program code or instructions on a device, whether compiled, interpreted, or run using other techniques.

## Claims

1. A method for tuning a model of a subterranean domain, comprising:
determining a relationship between a first parameter of the model and a second parameter of the model, wherein a modification to the first parameter causes the second parameter to be modified according to the relationship;
receiving data representing a physical characteristic of a reservoir represented in the model of the subterranean domain;
modifying the first parameter based at least partially on the data;
modifying the second parameter based on the relationship, by operation of a processor; and
updating the model using the first parameter and the second parameter after modifying the first parameter and after modifying the second parameter.

2. The method of claim 1, further comprising:
determining a second relationship between the first parameter and the second parameter, wherein a modification to the second parameter causes the first parameter to be modified according to the second relationship.

3. The method of claim 2, further comprising:
associating a first indicator with the first parameter and a second indicator with the second indicator, wherein the first indicator indicates a number of times the first parameter has changed and the second indicator indicates a number of times the second indicator has changed.

4. The method of claim 3, further comprising:
enforcing a maximum number of changes to the first parameter, the second parameter, or both using the first indicator, the second indicator, or both.

5. The method of claim 4, wherein the maximum number is one and the first and second indicators are each a Boolean flag.

6. The method of claim 4, wherein enforcing the maximum number comprises:
determining that modifying the second parameter results in a modification to the first parameter based on the second relationship;
determining that the first parameter has been modified a number of times equal to the maximum number of changes; and
in response to determining that the first parameter has been modified the number of times, abstaining from modifying the first parameter further.

7. The method of claim 3, further comprising:
determining that the first parameter, the second parameter, or both, after modification, does not accurately describe the model;
resetting the first indicator, the second indicator, or both; and
modifying the first parameter a second time after resetting the indicator.

8. The method of claim 1, further comprising:
determining that a loop incorporating the first and second parameters exists;
in response to determining that the loop exists, associating an indicator with the first parameter, wherein the indicator is associated with a number of times that a value associated with the first parameter has changed; and
enforcing a maximum number of times that the first parameter can change using the indicator.

9. The method of claim 1, wherein the data is associated with a pressure transient analysis, a rate transient analysis, or both.

10. The method of claim 1, wherein the first parameter is representative of a characteristic of a fracture or a subterranean well in the subterranean domain.

11. A computing system, comprising:
one or more processors; and
a memory system coupled with the one or more processors, wherein the memory system comprises one or more computer-readable media containing instructions that, when executed by at least one of the one or more processors, cause the computing system to perform operations, the operations comprising:
determining a relationship between a first parameter of the model and a second parameter of the model, wherein a modification to the first parameter causes the second parameter to be modified according to the relationship;
receiving data representing a physical characteristic of a reservoir represented in the model of the subterranean domain;
modifying the first parameter based at least partially on the data;
modifying the second parameter based on the relationship; and
updating the model using the first parameter and the second parameter after modifying the first parameter and after modifying the second parameter.

12. The system of claim 11, wherein the data comprises pressure transient analysis data, rate transient analysis data, or both.

13. The system of claim 11, wherein the operations further comprise:
determining a second relationship between the first parameter and the second parameter, wherein a modification to the second parameter causes the first parameter to be modified according to the second relationship.

14. The system of claim 13, wherein the operations further comprise:
associating a first indicator with the first parameter and a second indicator with the second indicator, wherein the first indicator indicates a number of times the first parameter has changed and the second indicator indicates a number of times the second indicator has changed; and
enforcing a maximum number of changes to the first parameter, the second parameter, or both using the first indicator and the second indicator.

15. The system of claim 14, wherein enforcing the maximum number comprises:
determining that modifying the second parameter results in a modification to the first parameter based on the second relationship;
determining that the first parameter has been modified a number of times equal to the maximum number of changes; and
in response to determining that the first parameter has been modified the number of times, abstaining from modifying the first parameter further.

16. The system of claim 14, wherein the operations further comprise:
determining that the first parameter, the second parameter, or both, after modification does not accurately describe the model;
resetting the first indicator, the second indicator, or both; and
modifying the first parameter a second time after resetting the indicator.

17. The system of claim 11, wherein the operations further comprise:
determining that a loop incorporating the first and second parameters exists; and
in response to determining that the loop exists, associating an indicator with the first parameter, wherein the indicator is associated with a number of times that a value of the first parameter has changed; and
enforcing a maximum number of times that the first parameter can change using the indicator.

18. A non-transitory computer-readable medium storing instructions that, when executed by a processor, are configured to cause the processor to perform operations, the operations comprising:
determining a relationship between a first parameter of the model and a second parameter of the model, wherein a modification to the first parameter causes the second parameter to be modified according to the relationship;
receiving data representing a physical characteristic of a reservoir represented in the model of the subterranean domain;
modifying the first parameter based at least partially on the data;
modifying the second parameter based on the relationship; and
updating the model using the first parameter and the second parameter after modifying the first parameter and after modifying the second parameter.

19. The medium of claim 18, wherein the operations further comprise:
determining a second relationship between the first parameter and the second parameter, wherein modifying the second parameter is associated with modifying the first parameter based on the second relationship;
associating a first indicator with the first parameter and a second indicator with the second indicator, wherein the first indicator indicates a number of times the first parameter has changed and the second indicator indicates a number of times the second indicator has changed; and
enforcing a maximum number of changes to the first parameter, the second parameter, or both using the first indicator and the second indicator.

20. The medium of claim 19, wherein enforcing the maximum number comprises:
determining that modifying the second parameter results in a modification to the first parameter based on the second relationship;
determining that the first parameter has been modified a number of times equal to the maximum number of changes; and
in response to determining that the first parameter has been modified the number of times, abstaining from modifying the first parameter further.
